# EUROPEAN PATENT APPLICATION

(11) **EP 3 576 078 A1**
(43) Date of publication of application: **04.12.2019**
(21) Application number: 18745443.4
(22) Date of filing: 26.01.2018
(51) Int. Cl.: G09B 19/02, G09B 19/00

(54) **LEARNING SUPPORT METHOD AND SYSTEM FOR FOUR BASIC ARITHMETIC OPERATIONS, AND NON-TRANSITORY COMPUTER-READABLE RECORDING MEDIUM**

(30) Priority: 26.01.2017 KR 20170012451; 31.03.2017 KR 20170041855
(71) Applicant: Knowre Korea Inc., Seoul 06621 (KR)
(72) Inventor: KIM, Yong Jae, Seoul 06597 (KR); KIM, Seo Joon, Seoul 07322 (KR)
(74) Representative: Zardi, Marco
(86) International application number: PCT/KR2018/001192
(87) International publication number: WO 2018/139902

(57) **Abstract**

The present invention relates to a learning support method and system for four basic arithmetic operations, and a non-transitory computer-readable recording medium. According to an aspect of the present invention, a learning support method for four basic arithmetic operations is provided, the method comprising the steps of: calculating a user's achievement score for at least one number type that can be matched with a knowledge unit, by making reference to a feedback from the user to whom a question about the at least one number type is provided; and determining, on the basis of the calculated achievement score, a supplemental question to be provided to the user, which is associated with the number type the user lacks proficiency in.

## Description

### FIELD OF THE INVENTION

The present invention relates to a method, system and non-transitory computer-readable recording medium for supporting learning of basic arithmetic operations.

### BACKGROUND

A variety of methods have been introduced to evaluate a learner's achievement in basic arithmetic operations such as addition, subtraction, multiplication, and division, which are essential to mathematics education, and to supplement weak parts of the learner based on the results of the achievement evaluation.

As an example of related conventional techniques, a method has been in wide use to provide a learner with a question, determine whether an answer to the provided question submitted by the learner is correct or incorrect, and further provide the learner with a question similar to the question that the learner gets incorrect as a supplemental question.

However, according to the techniques introduced so far as well as the above-described conventional technique, when a learner submits an incorrect answer to a given question about basic arithmetic operations, there is no other way than to get the learner to solve more questions about basic arithmetic operations similar to the given question. That is, there is no way to determine the learner's achievement (e.g., the learner's accuracy and speed of solving questions) through various and systematic measures, or to provide the learner with questions about basic arithmetic operations associated with parts in which the learner is weak within an ongoing curriculum, in consideration of information like the learner's grade and learning level.

### SUMMARY OF THE INVENTION

One object of the present invention is to solve all the above-described problems in the prior art.

Another object of the invention is to determine a supplemental question about basic arithmetic operations to be provided to a user (i.e., learner) on the basis of achievement of the user and predetermined user information.

Yet another object of the invention is to calculate learning achievement of a user with reference to the user's past history of solving questions about basic arithmetic operations.

The representative configurations of the invention to achieve the above objects are described below.

According to one aspect of the invention, there is provided a method for supporting learning of basic arithmetic operations, comprising the steps of: calculating a user's achievement score for at least one number type matchable with a knowledge unit, with reference to feedback from the user, wherein a question for the at least one number type is provided to the user; and determining a supplemental question to be provided to the user, which is associated with the number type in which the user is weak, on the basis of the calculated achievement score.

According to another aspect of the invention, there is provided a system for supporting learning of basic arithmetic operations, comprising: a score calculation unit configured to calculate a user's achievement score for at least one number type matchable with a knowledge unit, with reference to feedback from the user, wherein a question for the at least one number type is provided to the user; and a question determination unit configured to determine a supplemental question to be provided to the user, which is associated with the number type in which the user is weak, on the basis of the calculated achievement score.

In addition, there are further provided other methods and systems to implement the invention, as well as non-transitory computer-readable recording media having stored thereon computer programs for executing the methods.

According to the invention, it is possible to determine a supplemental question about basic arithmetic operations to be provided to a user on the basis of achievement of the user and predetermined user information.

According to the invention, it is possible to calculate learning achievement of a user with reference to the user's past history of solving questions about basic arithmetic operations.

### BRIEF DESCRIPTION OF THE DRAWINGS

FIG. 1 schematically shows the configuration of an entire system for supporting learning of basic arithmetic operations according to one embodiment of the invention.
FIG. 2 specifically shows the internal configuration of a learning support system 200 according to one embodiment of the invention.
FIG. 3 illustratively shows a knowledge unit according to one embodiment of the invention and number types matched with the knowledge unit.
FIGS. 4 and 5 illustratively show learning contents provided to a user through the learning support system 200 according to one embodiment of the invention.

### DETAILED DESCRIPTION

In the following detailed description of the present invention, references are made to the accompanying drawings that show, by way of illustration, specific embodiments in which the invention may be practiced. These embodiments are described in sufficient detail to enable those skilled in the art to practice the invention. It is to be understood that the various embodiments of the invention, although different from each other, are not necessarily mutually exclusive. For example, specific shapes, structures and characteristics described herein may be implemented as modified from one embodiment to another without departing from the spirit and scope of the invention. Furthermore, it shall be understood that the locations or arrangements of individual elements within each of the embodiments may also be modified without departing from the spirit and scope of the invention. Therefore, the following detailed description is not to be taken in a limiting sense, and the scope of the invention is to be taken as encompassing the scope of the appended claims and all equivalents thereof. In the drawings, like reference numerals refer to the same or similar elements throughout the several views.

Hereinafter, various preferred embodiments of the present invention will be described in detail with reference to the accompanying drawings to enable those skilled in the art to easily implement the invention.

### Configuration of the entire system

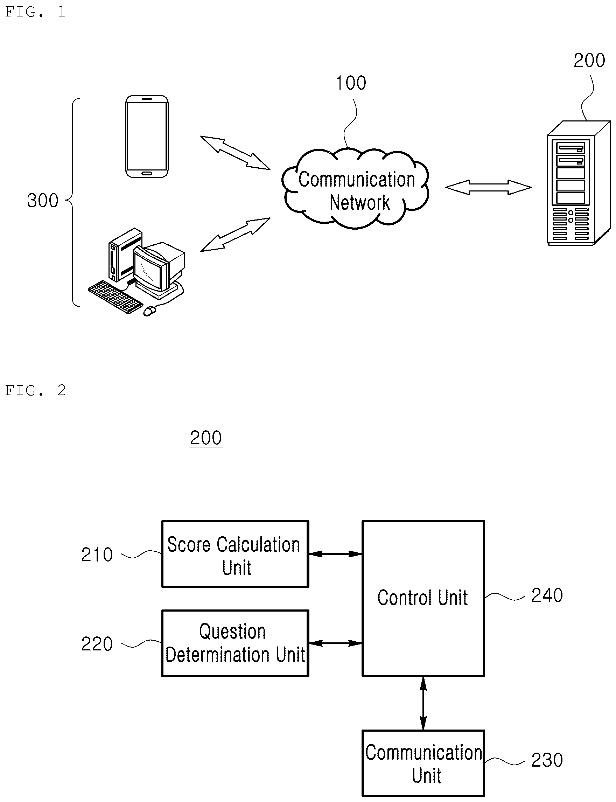

FIG. 1 schematically shows the configuration of the entire system for supporting learning of basic arithmetic operations according to one embodiment of the invention.

As shown in FIG. 1, the entire system according to one embodiment of the invention may comprise a communication network 100, a learning support system 200, and a user device 300.

First, the communication network 100 according to one embodiment of the invention may be implemented regardless of communication modality such as wired and wireless communications, and may be constructed from a variety of communication networks such as local area networks (LANs), metropolitan area networks (MANs), and wide area networks (WANs). Preferably, the communication network 100 described herein may be the Internet or the World Wide Web (WWW). However, the communication network 100 is not necessarily limited thereto, and may at least partially include known wired/wireless data communication networks, known telephone networks, or known wired/wireless television communication networks.

For example, the communication network 100 may be a wireless data communication network, at least a part of which may be implemented with a conventional communication scheme such as WiFi communication, WiFi-Direct communication, Long Term Evolution communication, Bluetooth communication (e.g., Bluetooth Low Energy communication), infrared communication, and ultrasonic communication. As another example, the communication network 100 may be an optical communication network, at least a part of which may be implemented with a conventional communication scheme such as LiFi (Light Fidelity).

Next, the learning support system 200 according to one embodiment of the invention may communicate with the user device 300 to be described below via the communication network 100, and may provide questions, correct answers, solution information, achievement scores of a user, and the like to the user device 300, and obtain feedback on at least some of the foregoing (e.g., the user's own answers to the questions provided to the user) provided from the user in the user device 300, if necessary. The learning support system 200 may be a server operated to provide learning support services on the communication network 100.

Further, the learning support system 200 according to one embodiment of the invention may refer to feedback from a user who is provided with a question for at least one of types of numbers that may be given in questions about basic arithmetic operations to calculate the user's achievement score for the corresponding number type, and determine a supplemental question associated with the number type in which the user is weak, on the basis of the calculated achievement score and/or predetermined user information.

The number types may be matched with a knowledge unit. The inventor(s) has introduced the concept of a knowledge unit through the disclosures of Korean Registered Patent Nos. 10-1515894 and 10-1665024 (which are to be regarded as being incorporated herein by reference in their entirety). It can be understood that in connection with the invention, the knowledge unit means a basic unit of mathematical knowledge required to solve questions about basic arithmetic operations. For example, a knowledge unit of a question such as "Find the value of 3 x 7." may be multiplication of two single-digit numbers, and a knowledge unit of a question such as "Find the value of 13 + 7." may be addition of a two-digit number and a single-digit number.

As a more detailed example of the knowledge unit and the corresponding number types, a knowledge unit according to one embodiment of the invention may be defined as addition of two single-digit numbers without carrying, and may be matched with a total of 36 number types including "1 + 1 = 2", "1 + 2 = 3", "1 + 3 = 4", ..., "7 + 1 = 8", "7 + 2 = 9" and "8 + 1 = 9."

Lastly, the user device 300 according to one embodiment of the invention is digital equipment that may function to connect to and then communicate with the learning support system 200, and any type of digital equipment having a memory means and a microprocessor for computing capabilities, such as a smart device (e.g., a smart phone, a smart watch, smart glasses, etc.), a desktop computer, a notebook computer, a workstation, a personal digital assistant (PDA), a web pad, and a mobile phone, may be adopted as the user device 300 according to the invention.

Meanwhile, according to one embodiment of the invention, the user device 300 may include an application to allow a user to receive services for supporting learning of basic arithmetic operations according to the embodiments of the invention. The application may be downloaded from the learning support system 200 or an external application distribution server (not shown). Meanwhile, the user device 300 may also include a browser to receive the same type of services.

The configuration and function of the learning support system 200 according to the invention will be discussed in more detail below. Meanwhile, although the learning support system 200 has been described as above, the above description is illustrative and it will be apparent to those skilled in the art that at least a part of the functions or components required for the learning support system 200 may be implemented or included in the user device 300 or another external system (not shown), as necessary.

### Configuration of the learning support system

Hereinafter, the internal configuration of the learning support system 200 crucial for implementing the invention and the functions of the respective components thereof will be discussed.

FIG. 2 specifically shows the internal configuration of the learning support system 200 according to one embodiment of the invention.

The learning support system 200 according to one embodiment of the invention may be digital equipment having a memory means and a microprocessor for computing capabilities. The learning support system 200 may be a server system. As shown in FIG. 2, the learning support system 200 may comprise a score calculation unit 210, a question determination unit 220, a communication unit 230, and a control unit 240. According to one embodiment of the invention, at least some of the score calculation unit 210, the question determination unit 220, the communication unit 230, and the control unit 240 may be program modules to communicate with an external system (e.g., the user device 300 or other external system). The program modules may be included in the learning support system 200 in the form of operating systems, application program modules and other program modules, while they may be physically stored in a variety of commonly known storage devices. Further, the program modules may also be stored in a remote storage device that may communicate with the learning support system 200. Meanwhile, such program modules may include, but not limited to, routines, subroutines, programs, objects, components, data structures and the like for performing specific tasks or executing specific abstract data types as will be described below in accordance with the invention.

First, the score calculation unit 210 according to one embodiment of the invention may function to refer to feedback from a user who is provided with a question for at least one of various number types that may be matched with a knowledge unit to calculate the user's achievement score for the corresponding number type.

Specifically, the score calculation unit 210 may calculate the user's accuracy score and/or speed score for the corresponding number type with reference to the user's feedback, and calculate the achievement score using the calculated accuracy score and/or speed score. The accuracy score may be calculated on the basis of whether the user's answer to the question is correct or incorrect, and the speed score may be calculated on the basis of an amount of time taken by the user to solve the question. For example, the score calculation unit 210 may calculate the accuracy score for the corresponding number type by giving 1 point when the user's answer to the question is correct and 0 point when incorrect, and may calculate the speed score for the corresponding number type by dividing a target time taken to solve the question by an amount of time actually taken by the user to solve the question.

Further, according to one embodiment of the invention, the score calculation unit 210 may calculate the achievement score more precisely by applying a weight assigned for a specific knowledge unit or number type and/or a weight determined according to the user's learning objectives.

For example, the score calculation unit 210 may calculate an adjusted achievement score by assigning a greater weight to the accuracy score than to the speed score when the user's learning objectives are to achieve high accuracy, or by assigning a greater weight to the speed score when the user's learning objectives are to achieve high speed. To this end, it is possible to use an equation, "Achievement Score = (Weight 1 x Accuracy Score) + (Weight 2 x Speed Score)" where Weight 1 + Weight 2 = 1 and Weight 1 > Weight 2 or Weight 1 < Weight 2.

Meanwhile, according to one embodiment of the invention, the score calculation unit 210 may calculate the speed score with further reference to information on the user. The user information may be information on the user's basic profile including the user's grade, age and the like. Specifically, the score calculation unit 210 may differently set a target time for the user to solve a question corresponding to a specific number type according to the user information. That is, for example, even for the same number type or the same question, the target time may be set to be shorter when the user is in the second grade of elementary school, and to be longer when the user is in the first grade of elementary school.

Further, according to one embodiment of the invention, the score calculation unit 210 may calculate the accuracy score and the speed score with further reference to the user's past history of solving questions for the same number type.

Specifically, the score calculation unit 210 may calculate the accuracy score and/or the speed score by summing past accuracy scores and/or past speed scores accumulated for a specific number type. In this case, according to one embodiment of the invention, the score calculation unit 210 may calculate the accuracy score or the speed score by assigning weights such that the weights for older accuracy or speed scores are reduced as time passes, or such that the weights for accuracy or speed scores obtained by solving earlier questions are reduced as the number of solved questions is increased. Of course, the score calculation unit 210 may also calculate the accuracy score and/or the speed score through an arithmetic mean of accuracy scores and/or speed scores of the user accumulated in the past.

For example, it may be assumed that a user solved a first and a second question for a specific number type two years ago and a year ago, respectively, and gave correct answers to both the two questions. In this case, the accuracy score may be 2 / 2 (i.e., two correct answers to two questions) when the weights based on time are not taken into account, while the accuracy score may be 2 / 2 x (1 - 0.1 x 1) x (1 - 0.1 x 2) = 0.72 when the weights based on time are assigned. That is, an equation such as "Accuracy Score x (1 - Loss Coefficient x Time (in years) Elapsed From When The Question For The Corresponding Number Type Was Solved)" may be used for the above calculation, and the loss coefficient as used herein may be determined according to a known forgetting curve.

As another example, it may be assumed that a user solved three questions for a specific number type and gave correct answers to all the three questions. In this case, the accuracy score may be 3 / 3 (i.e., three correct answers to three questions) when the weights based on the number of solved questions are not taken into account, while the accuracy score may be 3 / 3 x (1 - 0.1 x 0) x (1 - 0.1 x 1) x (1 - 0.1 x 2) = 0.72 when the weights based on the number of solved questions are assigned. That is, an equation such as "Accuracy Score x (1 - Loss Coefficient x (Number Of Solved Questions - 1))" may be used for the above calculation. Here, for the sake of convenience, the number of solved questions may be set to be 1 for the most recently solved question, 2 for the second most recently solved question, and the like.

Meanwhile, according to one embodiment of the invention, the score calculation unit 210 may calculate the achievement score for at least one of a knowledge unit and a number type.

Specifically, the score calculation unit 210 may calculate the achievement score for a specific knowledge unit by summing achievement scores of the user for at least one specific number type that may be matched with the knowledge unit, and the achievement score may also be calculated separately for at least some of specific number types. In the former case, when the achievement scores of the user for at least one number type matched with the knowledge unit are summed, different weights may be assigned for each number type.

Next, the question determination unit 220 according to one embodiment of the invention may determine a number type in which the user is weak when carrying out basic arithmetic operations and/or a supplemental question associated with the number type, on the basis of the achievement score calculated by the score calculation unit 210 (and on the further basis of the user information, as necessary). The user information may include at least one of a learning grade, learning unit, learning level, and learning progress of the user.

As a specific example, when a user is weak in a number type of "3 + 5" in the first grade curriculum of elementary school (in this case, the corresponding knowledge unit is addition of two single-digit numbers without carrying) and the user is in the third grade of elementary school, a supplemental question may be determined as a question like "1073 + 2035" (i.e., a question including the above number type of "3 + 5") which falls within the third grade curriculum of elementary school and includes the number type in which the user is weak.

Next, the communication unit 230 according to one embodiment of the invention may function to enable data transmission/reception from/to the score calculation unit 210 and the question determination unit 220.

Lastly, the control unit 240 according to one embodiment of the invention may function to control data flow among the score calculation unit 210, the question determination unit 220, and the communication unit 230. That is, the control unit 240 according to the invention may control data flow into/out of the learning support system 200 or data flow among the respective components of the learning support system 200, such that the score calculation unit 210, the question determination unit 220, and the communication unit 230 may carry out their particular functions, respectively.

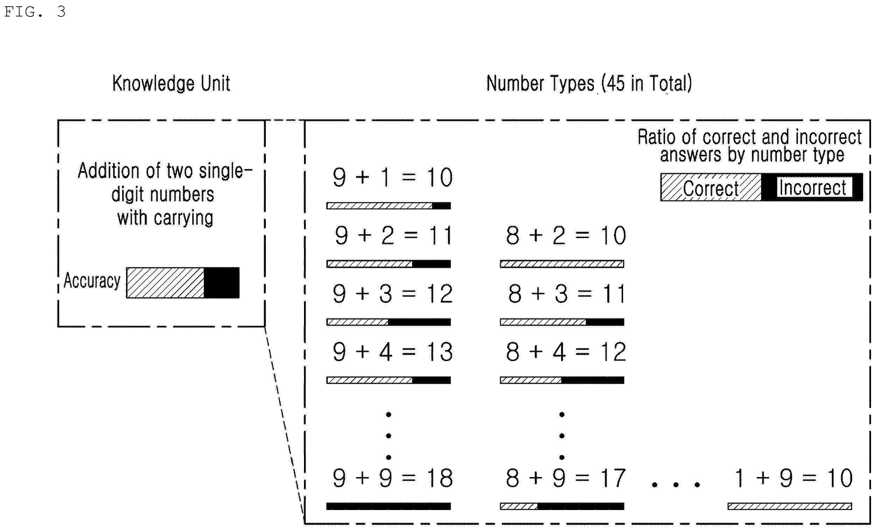

FIG. 3 illustratively shows a knowledge unit according to one embodiment of the invention and number types matched with the knowledge unit.

Referring to FIG. 3, the learning support system 200 according to one embodiment of the invention may provide a user with questions for number types (e.g., a total of 45 number types including "9 + 1 = 10", "9 + 2 = 11", ..., and "1 + 9 = 10") matched with a knowledge unit, "Addition of two single-digit numbers with carrying" and may calculate an achievement score of the user for each knowledge unit or each number type, with reference to feedback of the user.

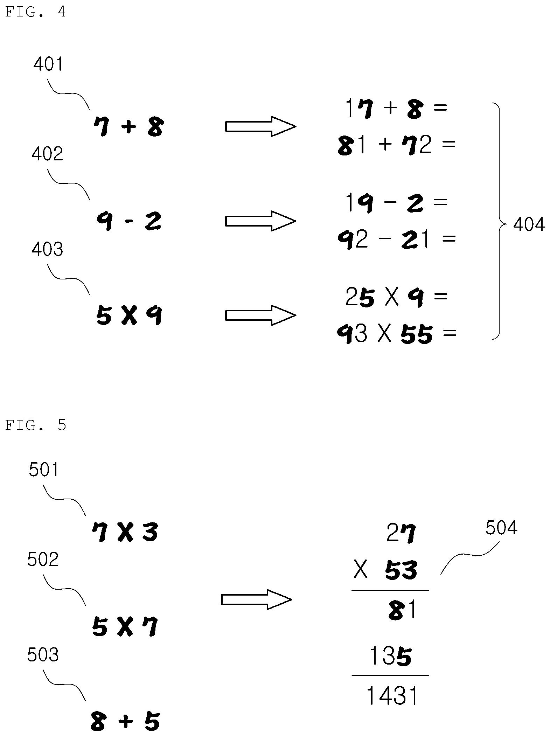

FIGS. 4 and 5 illustratively show learning contents provided to a user through the learning support system 200 according to one embodiment of the invention.

Referring to FIGS. 4 and 5, the learning support system 200 according to one embodiment of the invention may calculate an achievement score of the user on the basis of an accuracy score and a speed score of the user, and may select "7 + 8" (401), "9 - 2" (402) and "5 x 9" (403) as weak number types for which the user's achievement score is not higher than a predetermined level, and determine supplemental questions 404 for each of the selected weak number types. Further, the learning support system 200 may select "7 x 3" (501), "5 x 7" (502) and "8 + 5" (503) as weak number types for which the user's achievement score is not higher than a predetermined level, and determine a supplemental question 504 including all the selected weak number types.

The embodiments according to the invention as described above may be implemented in the form of program instructions that can be executed by various computer components, and may be stored on a computer-readable recording medium. The computer-readable recording medium may include program instructions, data files, data structures and the like, separately or in combination. The program instructions stored on the computer-readable recording medium may be specially designed and configured for the present invention, or may also be known and available to those skilled in the computer software field. Examples of the computer-readable recording medium include the following: magnetic media such as hard disks, floppy disks and magnetic tapes; optical media such as compact disk-read only memory (CD-ROM) and digital versatile disks (DVDs); magneto-optical media such as floptical disks; and hardware devices such as read-only memory (ROM), random access memory (RAM) and flash memory, which are specially configured to store and execute program instructions. Examples of the program instructions include not only machine language codes created by a compiler or the like, but also high-level language codes that can be executed by a computer using an interpreter or the like. The above hardware devices may be configured to operate as one or more software modules to perform the processes of the present invention, and vice versa.

Although the present invention has been described above in terms of specific items such as detailed elements as well as the limited embodiments and the drawings, they are only provided to help more general understanding of the invention, and the present invention is not limited to the above embodiments. It will be appreciated by those skilled in the art to which the present invention pertains that various modifications and changes may be made from the above description.

Therefore, the spirit of the present invention shall not be limited to the above-described embodiments, and the entire scope of the appended claims and their equivalents will fall within the scope and spirit of the invention.

## Claims

1. A method for supporting learning of basic arithmetic operations, comprising the steps of:
calculating a user's achievement score for at least one number type matchable with a knowledge unit, with reference to feedback from the user, wherein a question for the at least one number type is provided to the user; and
determining a supplemental question to be provided to the user, which is associated with the number type in which the user is weak, on the basis of the calculated achievement score.

2. The method of Claim 1, wherein in the score calculating step, the achievement score is calculated on the basis of an accuracy score and a speed score for the at least one number type.

3. The method of Claim 2, wherein the speed score is calculated on the basis of an amount of time taken to solve the question, which is determined according to information on the user.

4. The method of Claim 1, wherein in the score calculating step, the achievement score is calculated with reference to the user's past history of solving questions for the at least one number type.

5. The method of Claim 4, wherein the achievement score is calculated on the basis of an accuracy score and a speed score for the at least one number type, and
wherein the accuracy score and the speed score are calculated on the basis of weights assigned such that older past accuracy scores and older past speed scores are assigned smaller weights, respectively.

6. The method of Claim 4, wherein the achievement score is calculated on the basis of an accuracy score and a speed score for the at least one number type, and
wherein the accuracy score and the speed score are calculated on the basis of weights assigned such that past accuracy scores and past speed scores are assigned smaller weights as a number of solved questions is increased, respectively.

7. The method of Claim 1, wherein the method further comprises the step of calculating the user's achievement score for the knowledge unit, and
wherein the achievement score for the knowledge unit is calculated on the basis of a sum or a weighted sum of the achievement score for the at least one number type.

8. The method of Claim 1, wherein the question determining step comprises the step of determining the supplemental question on the basis of the calculated achievement score and information on the user.

9. A non-transitory computer-readable recording medium having stored thereon a computer program for executing the method of any one of Claims 1 to 8.

10. A system for supporting learning of basic arithmetic operations, comprising:
a score calculation unit configured to calculate a user's achievement score for at least one number type matchable with a knowledge unit, with reference to feedback from the user, wherein a question for the at least one number type is provided to the user; and
a question determination unit configured to determine a supplemental question to be provided to the user, which is associated with the number type in which the user is weak, on the basis of the calculated achievement score.

11. The system of Claim 10, wherein in the score calculation unit, the achievement score is calculated on the basis of an accuracy score and a speed score for the at least one number type.

12. The system of Claim 11, wherein the speed score is calculated on the basis of an amount of time taken to solve the question, which is determined according to information on the user.

13. The system of Claim 10, wherein in the score calculation unit, the achievement score is calculated with reference to the user's past history of solving questions for the at least one number type.

14. The system of Claim 13, wherein the achievement score is calculated on the basis of an accuracy score and a speed score for the at least one number type, and
wherein the accuracy score and the speed score are calculated on the basis of weights assigned such that older past accuracy scores and older past speed scores are assigned smaller weights, respectively.

15. The system of Claim 13, wherein the achievement score is calculated on the basis of an accuracy score and a speed score for the at least one number type, and
wherein the accuracy score and the speed score are calculated on the basis of weights assigned such that past accuracy scores and past speed scores are assigned smaller weights as a number of solved questions is increased, respectively.

16. The system of Claim 10, wherein the score calculation unit further calculates the user's achievement score for the knowledge unit, and
wherein the achievement score for the knowledge unit is calculated on the basis of a sum or a weighted sum of the achievement score for the at least one number type.

17. The system of Claim 10, wherein the question determination unit is configured to determine the supplemental question on the basis of the calculated achievement score and information on the user.
